# FASCICULE DE BREVET EUROPEEN

(11) **EP 1 907 654 B1**
(45) Date de publication et mention de la délivrance du brevet: **16.09.2009**
(21) Numéro de dépôt: 06779052.7
(22) Date de dépôt: 13.07.2006
(51) Int. Cl.: E05C 3/12

(54) **DISPOSITIF DE COMMANDE DU VERROUILLAGE ET DEVERROUILLAGE D'UNE PORTE D'AERONEF ET PORTE D'AERONEF INTEGRANT UN TEL DISPOSITIF**
VORRICHTUNG ZUR STEUERUNG DES VERRIEGELNS UND ENTRIEGELNS EINER FLUGZEUGTÜR UND DIESE ENTHALTENDE FLUGZEUGTÜR
DEVICE FOR CONTROLLING LOCKING AND UNLOCKING OF AN AIRCRAFT DOOR AND AIRCRAFT DOOR INTEGRATING SAME

(30) Priorité: 27.07.2005 FR 0552336
(43) Date de publication de la demande: 09.04.2008
(73) Titulaire: AIRBUS France, 31060 Toulouse Cédex (FR)
(72) Inventeur: TOBOSO, Alexandra, F-31840 Seilh (FR); COSTECALDE, Christian, F-31700 Beauzelle (FR)
(74) Mandataire: Fantin, Laurent
(86) Numéro de dépôt international: PCT/FR2006/050716
(87) Numéro de publication internationale: WO 2007/012774

(56) Documents cités:
- WO-A-00/76841
- US-A- 3 791 073
- US-A- 4 365 831
- US-A- 5 031 863
- US-A1- 2002 096 602
- US-B1- 6 343 815

## Description

La présente invention se rapporte à un dispositif de commande du verrouillage et déverrouillage d'une porte d'aéronef ainsi qu'à une porte d'aéronef intégrant un tel dispositif.

Pour la suite de la description, on entend par porte tous les dispositifs tels que battant, trappe ou analogue comprenant un panneau susceptible d'obturer une ouverture dans une paroi dans une première position et de la dégager dans une autre position quelles que soient les formes, les dimensions et la fonction.

Une porte d'aéronef comprend d'une part un dormant lié au fuselage de l'aéronef, délimitant une ouverture, et d'autre part, un battant articulé par rapport au dormant, susceptible d'occuper une première position dite fermée dans laquelle il obture l'ouverture et une autre position dans laquelle il dégage l'ouverture.

Différents moyens peuvent être prévus pour permettre l'articulation du battant par rapport au dormant, notamment ceux décrits dans le document FR-2.819.782. Ces moyens d'articulation sont tels qu'ils permettent à la surface extérieure du battant de l'aéronef d'affleurer à l'enveloppe extérieure du fuselage pour limiter les perturbations des écoulements d'air autour dudit fuselage lorsque le battant est en position fermée.

En complément, la porte d'aéronef comprend des moyens de verrouillage et de déverrouillage pour maintenir le battant en position fermée. Selon les cas, ces moyens de verrouillage et déverrouillage peuvent se présenter sous la forme de pênes ou de verrous prévus au niveau du battant, susceptibles, à l'état verrouillé, de coopérer chacun avec un logement ou gâche prévu au niveau du dormant. Selon un autre mode de réalisation, les moyens de verrouillage et déverrouillage de la porte comprennent des butées disposées en périphérie du battant susceptibles, à l'état verrouillé, de prendre appui contre des butées prévues au niveau du dormant, le battant étant susceptible de se déplacer pour passer de l'état verrouillé à l'état déverrouillé de manière à ce que les butées du battant ne coopèrent plus avec les butées du dormant.

Des dispositifs de commande sont généralement prévus de part et d'autre de la porte pour assurer le changement d'état des moyens de verrouillage et déverrouillage de la porte.

La présente invention se rapporte plus particulièrement au dispositif de commande du verrouillage et déverrouillage de la porte prévu à l'extérieur de l'aéronef, appelé généralement poignée extérieure.

Le mouvement de la poignée par un opérateur provoque ainsi le changement d'état des moyens de verrouillage et de déverrouillage. Selon les cas, la poignée peut être liée directement ou indirectement, par l'intermédiaire de bielles par exemple, aux moyens de verrouillage et de déverrouillage de la porte.

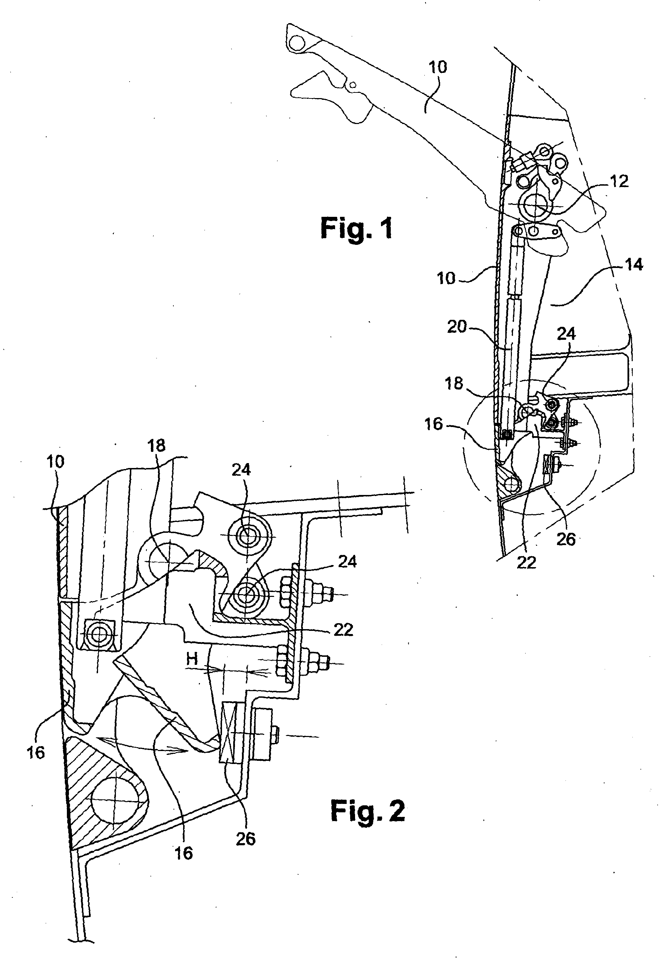

Sur les figures 1 et 2, on a représenté une poignée en position de repos, en trait fort, correspondant à l'état verrouillé des moyens de verrouillage et déverrouillage de la porte, et en position relevée, en trait mixte, correspondant à l'état déverrouillé des moyens de verrouillage et déverrouillage de la porte.

Cette poignée comprend un corps 10 susceptible de pivoter autour d'un axe de pivotement 12, disposé dans le plan de la porte, le corps étant susceptible d'être disposé, en position repos, dans un logement 14. Les formes et les dimensions de la poignée sont ajustées à celles du logement de manière à ce que la poignée obture le logement en position repos de manière à réduire les perturbations des écoulements d'air autour de l'enveloppe du fuselage.

Aussi, pour pouvoir saisir la poignée, le dispositif de commande comprend un volet 16 disposé selon les cas au niveau du corps de la poignée ou en périphérie. Ce volet 16 est articulé pour pouvoir occuper deux positions, une première position dite fermée dans laquelle il assure la continuité de l'enveloppe de l'aéronef afin de réduire les perturbations des écoulements d'air, et une autre position ouverte dans laquelle il permet la préhension de la poignée. Comme illustré sur la figure 2, le volet peut pivoter autour d'un axe 18 solidaire de la poignée, disposée dans le plan de ladite poignée. Selon une autre variante, comme illustré dans le document US-4.365.831, le volet peut être articulé par rapport au logement et non pas par rapport à la poignée.

Avantageusement, le volet 16 comprend des moyens de rappel 20 pour tendre à maintenir le volet dans la position fermée.

Selon une autre fonction du volet, ce dernier permet également de maintenir la poignée en position de repos. A cet effet, le dispositif de commande comprend des moyens de verrouillage et déverrouillage de la poignée susceptibles d'occuper deux états, un premier état verrouillé dans lequel la poignée est immobilisée en position repos, et un autre état déverrouillé dans lequel la poignée peut être manoeuvrée, notamment jusqu'à la position relevée.

Selon une variante illustrée par la figure 2, les moyens de verrouillage et déverrouillage de la poignée comprennent d'une part au moins un crochet 22 solidaire du logement 14 (cinématiquement lié au battant), et d'autre part, au moins un axe de verrouillage 24 solidaire du volet 16 susceptible d'être retenu par le crochet 22 à l'état verrouillé. Selon une autre variante, le crochet peut être solidaire du volet et l'axe de verrouillage relié au logement.

Une butée rigide 26 est prévue au niveau du logement pour limiter la course du volet, notamment lors du passage entre l'état verrouillé et l'état déverrouillé. Cette butée rigide 26 comprend généralement un empilage de cales pour ajuster sa hauteur H en raison notamment des fluctuations dimensionnelles du crochet, du volet et/ou de la position relative entre le crochet et le volet. Ainsi, la hauteur H doit être ajustée pour chaque volet. Cette opération de réglage génère un coût supplémentaire, fonction du temps de réglage. Ce temps de réglage est d'autant plus long que ledit réglage doit être réalisé de manière minutieuse.

Ainsi, si la hauteur H de la butée est trop importante, le volet ne peut pas pivoter suffisamment et l'axe de verrouillage ne peut pas venir s'immobiliser dans le crochet et la poignée revient en position verrouillée, ce qui peut se traduire par une fermeture brusque et violente du volet sur les doigts de l'opérateur qui ferme la porté. A contrario, si la hauteur H de la butée est trop faible, il n'est pas possible de maîtriser la position du volet, ce qui peut se traduire par une immobilisation au sol de l'aéronef.

Aussi, la présente invention vise à pallier les inconvénients de l'art antérieur, en proposant un dispositif de commande du verrouillage et déverrouillage d'une porte d'un aéronef procurant un fonctionnement sûr et permettant de réduire les coûts de montage.

A cet effet, l'invention a pour objet un dispositif de commande du verrouillage et déverrouillage d'une porte ou analogue, comportant une poignée dont le mouvement permet de commander le changement d'état du verrouillage ou déverrouillage de ladite porte, un volet mobile entre une position fermée et une position ouverte dans laquelle il permet la préhension de ladite poignée, des moyens de verrouillage et de déverrouillage de ladite poignée susceptibles d'occuper deux états, un premier état verrouillé dans lequel la poignée est immobilisée et un second état dit déverrouillé dans lequel la poignée peut être manoeuvrée, ainsi qu'une butée permettant de contrôler le mouvement du volet, notamment lors du changement d'état des moyens de verrouillage et déverrouillage de la poignée, **caractérisé en ce que** la butée peut se déformer de manière élastique afin de pouvoir être déformée par le volet lors du changement d'état des moyens de verrouillage et de déverrouillage de la poignée.

Cet agencement permet d'éviter le réglage de la hauteur de la butée lors du montage ce qui contribue à réduire les coûts de montage. Par ailleurs, la butée étant déformable, elle permet quelle que soit sa hauteur le changement d'état des moyens de verrouillage et de déverrouillage de la poignée ce qui contribue à rendre le dispositif plus sûr.

D'autres caractéristiques et avantages ressortiront de la description qui va suivre de l'invention, description donnée à titre d'exemple uniquement, en regard des dessins annexés sur lesquels :
- la figure 1 est une vue illustrant un dispositif de commande du verrouillage et déverrouillage d'une porte d'aéronef selon l'art antérieur,
- la figure 2 est une coupe illustrant en détails un volet et une butée du dispositif de commande du verrouillage et déverrouillage d'une porte d'aéronef de la figure 1,
- la figure 3 est une vue en perspective illustrant une porte d'aéronef,
- les figures 4A et 4B sont des vues illustrant respectivement la porte en position verrouillée et en position déverrouillée,
- la figure 5 est une vue illustrant un dispositif de commande du verrouillage et déverrouillage d'une porte d'aéronef selon l'invention,
- la figure 6 est une coupe illustrant en détails un volet et une butée du dispositif de commande du verrouillage et déverrouillage d'une porte d'aéronef de la figure 5 à l'état verrouillé,
- les figures 7 et 8 sont des coupes illustrant en détails un volet et une butée du dispositif de commande du verrouillage et déverrouillage d'une porte d'aéronef de la figure 5 à différents moments du changement d'état entre l'état verrouillé et l'état déverrouillé, et
- la figure 9 est une vue en perspective d'une butée selon un mode de réalisation.

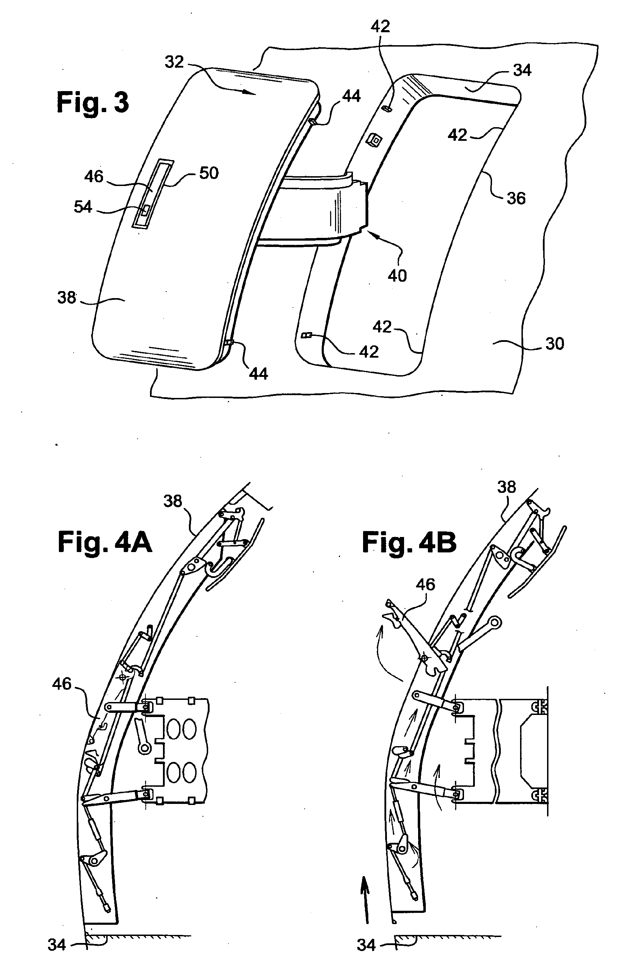

Sur la figure 3, on a représenté en 30 un fuselage d'aéronef comportant une porte 32, prévue notamment pour l'entrée et la sortie des personnes à l'intérieur de l'aéronef.

Comme indiqué dans le préambule, on entend par porte tout panneau susceptible d'obturer une ouverture dans une position et de la dégager dans une autre, quelles que soient les dimensions, les formes ou la fonction.

De manière connue, la porte 32 comprend d'une part un dormant 34 lié au fuselage 30 de l'aéronef, délimitant une ouverture 36, et d'autre part, un battant 38 articulé par rapport au dormant 34, susceptible d'occuper une première position dite fermée dans laquelle il obture l'ouverture 36 et une autre position dans laquelle il dégage l'ouverture 36. Des moyens d'articulation 40 sont prévus entre le dormant 34 et le battant 38 pour assurer le mouvement de ce dernier entre les positions fermée et ouverte. Différentes solutions et cinématiques peuvent être envisagées pour les moyens d'articulation 40, notamment celle décrite dans le document FR-2.819.782. Les moyens d'articulation 40 ne sont pas plus détaillés car ils sont connus de l'homme de l'art.

En complément, la porte 32 d'aéronef comprend des moyens de verrouillage et de déverrouillage pour maintenir le battant 38 en position fermée. Selon un mode de réalisation, les moyens de verrouillage et déverrouillage de la porte comprennent d'une part des butées 42 solidaires du dormant, et d'autre part des butées 44 disposées en périphérie, du battant 38 susceptibles, à l'état verrouillé, de prendre appui contre les butées 42 du dormant, la pression à l'intérieur de l'aéronef tendant à pousser le battant vers l'extérieur de l'aéronef.

Les moyens de verrouillage et déverrouillage de la porte peuvent prendre d'autres formes, se présenter par exemple sous forme de pênes. Aussi, les moyens de verrouillage et déverrouillage de la porte ne sont pas plus détaillés car ils sont à la portée de l'homme de l'art.

Au moins un dispositif de commande est prévu au niveau de la porte pour assurer le changement d'état des moyens de verrouillage et déverrouillage de la porte.

Généralement, un dispositif de commande est prévu à l'intérieur de l'aéronef et un autre à l'extérieur sous forme d'une poignée 46. Le dispositif de commande prévu à l'intérieur n'est pas plus détaillé car il est connu de l'homme de l'art.

Comme illustré sur les figures 4A et 4B, la poignée est susceptible d'être manoeuvrée par un opérateur, le mouvement de ladite poignée 46 provoquant, par l'intermédiaire de bielles ou analogues, le changement d'état des moyens de verrouillage et déverrouillage de la porte. Selon le mode de réalisation illustré sur la figure 4B, lorsqu'un opérateur relève la poignée 46, ce mouvement provoque un léger soulèvement de la porte. De ce fait, les butées du battant ne sont plus disposées au droit des butées du dormant, rendant possible le mouvement d' ouverture dudit battant par rapport au dormant.

Selon les variantes, la poignée peut être reliée directement ou non aux moyens de verrouillage et déverrouillage de la porte. La liaison entre la poignée 46 et les moyens de verrouillage et déverrouillage de la porte n'est pas plus détaillée car elle est à la portée de l'homme de l'art.

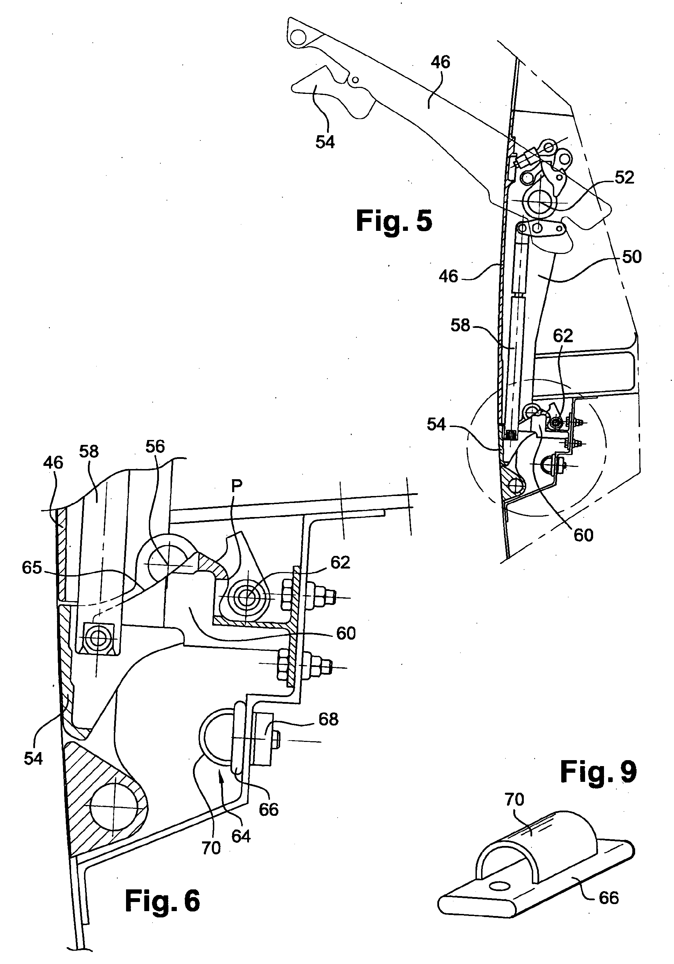

Comme illustré sur les figures 5 à 8, la poignée extérieure comprend un corps 48 permettant sa préhension par un opérateur, ledit corps étant articulé par rapport à un logement 50 ménagé au niveau de la surface extérieure du battant 38. Selon un mode de réalisation préféré, le corps peut pivoter autour d'un axe 52 de pivotement, disposé dans le plan de la porte, cinématiquement lié au logement 50, ladite poignée étant susceptible de pivoter entre une position dite de repos dans laquelle la poignée est disposée dans le logement et une autre position relevée comme illustré en trait mixte sur la figure 5. La forme et les dimensions de la poignée sont adaptées à celles du logement afin que la poignée en position repos ne vienne pas en saillie par rapport à l'enveloppe de l'aéronef et ne perturbe pas les écoulements d'air autour de l'aéronef.

Pour pouvoir saisir le corps de la poignée, un volet 54 est prévu au niveau du corps de la poignée ou en périphérie de la poignée. Ce volet 54 est articulé pour pouvoir occuper deux positions, une première position dite fermée dans laquelle il assure la continuité de l'enveloppe de l'aéronef afin de réduire les perturbations des écoulements d'air, et une autre position ouverte dans laquelle il permet la préhension de la poignée 46. Ainsi, dans la position fermée, la surface extérieure de la poignée 46 et la surface extérieure du volet 54 sont sensiblement coplanaires.

Selon un mode de réalisation illustré par les figures 5 à 8, le volet 54 peut pivoter autour d'un axe 56 solidaire de la poignée 46. Cependant, d'autres solutions techniques sont envisageables. Ainsi, le volet peut pivoter autour d'un axe solidaire du logement 50, comme illustré dans le document US-4.365.831.

Avantageusement, le volet 54 comprend des moyens de rappel 58, par exemple une bielle de rappel, pour tendre à maintenir le volet dans la position fermée.

Selon une autre caractéristique, la poignée 46 comprend des moyens de verrouillage et déverrouillage susceptibles d'occuper deux états, un premier état verrouillé dans lequel la poignée est immobilisée en position repos, et un autre état déverrouillé dans lequel la poignée peut être manoeuvrée, notamment jusqu'à la position relevée.

Selon un mode de réalisation, ces moyens de verrouillage et déverrouillage de la poignée comprennent d'une part au moins un crochet 60 solidaire du logement 50 (cinématiquement lié au battant), et d'autre part, au moins un axe de verrouillage 62 solidaire du volet 46, susceptible d'être retenu par le crochet 60 à l'état verrouillé.

En variante, le crochet 60 peut être relié à la poignée 46 et l'axe de verrouillage 62 au logement.

Selon un autre mode de réalisation, le volet 54 peut être disposé dans le prolongement de la poignée 46 et être articulé par rapport au logement 50. Dans ce cas, les moyens de verrouillage et de déverrouillage consistent en des formes coopérantes des extrémités du volet et de la poignée disposées bout à bout, comme illustré par exemple dans le document US-4.365.831.

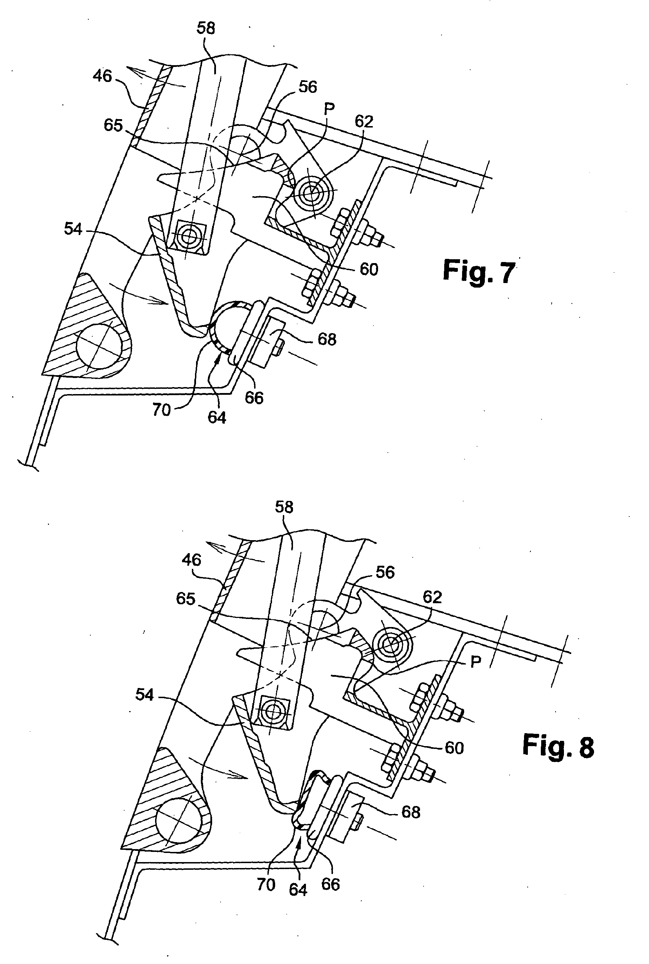

Le passage de l'état verrouillé à l'état déverrouillé ou vice versa est appelé point dur P. A cet instant, selon l'exemple illustré par les figures 7 et 8, l'axe de verrouillage 62 est relâché par le crochet 60 lors du passage à l'état déverrouillage. Lors du verrouillage, après le passage du point dur, l'axe de verrouillage 62 est retenu par le crochet 60.

Avantageusement, la poignée 46 comprend des moyens de rappel qui tendent à la soulever légèrement lorsque les moyens de verrouillage et déverrouillage sont à l'état déverrouillé, pour faciliter sa préhension.

Le dispositif de commande comprend également une butée 64 pour contrôler le mouvement du volet 54, notamment lors du passage du point dur P.

Selon l'invention, la butée 64 peut se déformer de manière élastique afin de pouvoir être légèrement écrasée par le volet 54 lors du passage du point dur P, comme illustré sur la figure 8. De plus, la butée 64 tend à exercer un effort sur le volet 54 de manière à s'opposer à l'ouverture dudit volet 54 et à maintenir l'axe de verrouillage 62 contre le crochet 60 lors du passage du point dur P.

La butée 64 déformable de manière élastique permet d'assurer un fonctionnement sûr de la poignée 46. En effet, même si la hauteur H de la poignée est trop importante, ladite butée peut s'écraser de manière à permettre au volet 54 de pivoter suffisamment afin d'autoriser le changement d'état des moyens de verrouillage et déverrouillage de la poignée et de permettre à l'axe de verrouillage 62 de passer le point dur P.

Par ailleurs, la butée 64 étant identique pour tous les aéronefs et ne nécessitant aucun réglage, elle permet de réduire les coûts de montage.

Selon un autre avantage procuré par la butée 64 déformable de manière élastique, la course du volet est limitée ce qui permet d'éviter une fermeture brusque et violente du volet 54 sur les doigts de l'opérateur qui ferme la porte.

Enfin, la butée 64 déformable de manière élastique permet d'indiquer à l'opérateur qui manipule la poignée 46, le passage imminent du point dur P et le chargement d'état des moyens de verrouillage et déverrouillage. Ainsi, lorsque le volet vient en contact contre la butée 64, l'axe de verrouillage 62 est toujours maintenu par le crochet 60 lors de la phase de déverrouillage, comme illustré sur la figure 7.

Lors de la fermeture de la porte, l'axe de verrouillage 62 est guidée par la rampe 65 du crochet 60 ce qui provoque le pivotement du volet 54. Lorsque ce dernier vient en contact contre la butée 64, l'axe de verrouillage 62 n'a toujours pas dépassé le point dur P et n'est toujours pas retenu par le crochet. En continuant le mouvement de fermeture, la butée 64 tend à s'écraser jusqu'à ce que l'axe 62 de verrouillage dépasse le point dur P. Après ce passage, l'axe de verrouillage 62 est maintenu par le crochet et le volet pivote de manière à revenir en position fermée.

Selon un mode de réalisation, la butée 64 déformable de manière élastique est en élastomère. Comme illustré sur la figure 9, selon un mode de réalisation, la butée comprend une base 66 rectangulaire avec au niveau d'une des faces une portion de cylindre 70 déformable en élastomère, des orifices étant prévus au niveau de la base pour des moyens 68 de fixation à un bâti, notamment au logement 50.

L'axe du cylindre 70 est avantageusement orienté sensiblement parallèle au bord du volet susceptible de venir en contact contre la butée.

Selon un mode de réalisation, la force exercée par la butée 64 à l'encontre du volet 54 est proportionnelle à l'écrasement de la butée. Toutefois, on pourrait envisager une fonction de la force exercée par la butée non linéaire.

Bien entendu, l'invention n'est évidemment pas limitée au mode de réalisation représenté et décrit ci-dessus, mais en couvre au contraire toutes les variantes, notamment en ce qui concerne les formes, les dimensions et la matière de la butée déformable de manière élastique, les moyens de verrouillage et déverrouillage de la poignée, les moyens de verrouillage et déverrouillage de la porte.

Enfin, l'invention peut s'appliquer à différents types de portes, de trappes ou analogue, prévues sur différents types d'engins.

## Revendications

1. Dispositif de commande du verrouillage et déverrouillage d'une porte ou analogue, comportant une poignée (46) dont le mouvement permet de commander le changement d'état du verrouillage ou déverrouillage de ladite porte, un volet (54) mobile entre une position fermée et une position ouverte dans laquelle il permet la préhension de ladite poignée (46), des moyens de verrouillage et de déverrouillage de ladite poignée (46) susceptibles d'occuper deux états, un premier état verrouillé dans lequel la poignée est immobilisée et un second état dit déverrouillé dans lequel la poignée peut être manoeuvrée, ainsi qu'une butée (64) permettant de contrôler le mouvement du volet (54), notamment lors du changement d'état des moyens de verrouillage et déverrouillage de la poignée (46), **caractérisé en ce que** la butée (64) peut se déformer de manière élastique afin de pouvoir être déformée par le volet (54) lors du changement d'état des moyens de verrouillage et de déverrouillage de la poignée (46).

2. Dispositif de commande du verrouillage et déverrouillage d'une porte ou analogue selon la revendication 1, **caractérisé en ce que** le volet (54) peut pivoter autour d'un axe (56) solidaire de la poignée (46).

3. Dispositif de commande du verrouillage et déverrouillage d'une porte ou analogue selon la revendication 1 ou 2, **caractérisé en ce que** la butée (64) déformable de manière élastique est en élastomère.

4. Dispositif de commande du verrouillage et déverrouillage d'une porte ou analogue selon l'une quelconque des revendications 1 à 3, **caractérisé en ce que** la butée (64) déformable de manière élastique comprend une base (66) rectangulaire avec au niveau d'une des faces une portion de cylindre (70) déformable en élastomère.

5. Porte d'aéronef intégrant un dispositif de commande du verrouillage et déverrouillage de ladite porte, ledit dispositif comportant une poignée (46) dont le mouvement permet de commander le changement d'état du verrouillage ou déverrouillage de ladite porte, un volet (54) mobile entre une position fermée et une position ouverte dans laquelle il permet la préhension de ladite poignée (46), des moyens de verrouillage et de déverrouillage de ladite poignée (46) susceptibles d'occuper deux états, un premier état verrouillé dans lequel la poignée est immobilisée et un second état dit déverrouillé dans lequel la poignée peut être manoeuvrée, ainsi qu'une butée (64) permettant de contrôler le mouvement du volet (54), notamment lors du changement d'état des moyens de verrouillage et déverrouillage de la poignée (46), **caractérisée en ce que** la butée (64) peut se déformer de manière élastique afin de pouvoir être déformée par le volet (54) lors du changement d'état des moyens de verrouillage et de déverrouillage de la poignée (46).

6. Porte d'aéronef selon la revendication 5, **caractérisée en ce que** le volet (54) peut pivoter autour d'un axe (56) solidaire de la poignée (46).

7. Porte d'aéronef selon la revendication 5 ou 6, **caractérisée en ce que** la butée (64) déformable de manière élastique est en élastomère.

8. Porte d'aéronef selon l'une quelconque des revendications 5 à 7, **caractérisée en ce que** la butée (64) déformable de manière élastique comprend une base (66) rectangulaire avec au niveau d'une des faces une portion de cylindre (70) déformable en élastomère.

## Claims

1. Control device for locking and unlocking a door or the like, comprising a handle (46) whose movement makes it possible to control the change of state of the locking or unlocking of said door, a hinged flap (54) that can move between a closed position and an open position in which it makes it possible to grip said handle (46), means for locking and unlocking said handle (46) that are able to occupy two states, a first locked state in which the handle is immobilized and a second so-called unlocked state in which the handle can be maneuvered, as well as a stop (64) that makes it possible to control the movement of the hinged flap (54), in particular during the change of state of the means for locking and unlocking the handle (46), **characterized in that** the stop (64) can be deformed elastically so as to be able to be deformed by the hinged flap (54) during the change of state of the means for locking and unlocking the handle (46).

2. Control device for locking and unlocking a door or the like according to claim 1, wherein the hinged flap (54) can pivot around a shaft (56) that is integral with the handle (46).

3. Control device for locking and unlocking a door or the like according to claim 1 or 2, wherein the stop (64) that is elastically deformable is made of elastomer.

4. Control device for locking and unlocking a door or the like according to any of claims 1 to 3, wherein the stop (64) that is elastically deformable comprises a rectangular base (66) with a deformable elastomer cylinder portion (70) at one of the faces.

5. Aircraft door that integrates a control device for locking and unlocking said door, whereby said device comprises a handle (46) whose movement makes it possible to control the change of state of the locking or unlocking of said door, a hinged flap (54) that can move between a closed position and an open position in which it makes it possible to grip said handle (46), means for locking and unlocking said handle (46) that are able to occupy two states, a first locked state in which the handle is immobilized and a second so-called unlocked state in which the handle can be maneuvered, as well as a stop (64) that makes it possible to control the movement of the hinged flap (54), in particular during the change of state of the means for locking and unlocking the handle (46), wherein the stop (64) can be deformed elastically so as to be able to be deformed by the hinged flap (54) during the change of state of the means for locking and unlocking the handle (46).

6. Aircraft door according to claim 5, wherein the hinged flap (54) can pivot around a shaft (56) that is integral with the handle (46).

7. Aircraft door according to claim 5 or 6, wherein the stop (64) that is elastically deformable is made of elastomer.

8. Aircraft door according to any of claims 5 to 7, wherein the stop (64) that is elastically deformable comprises a rectangular base (66) with a deformable elastomer cylinder portion (70) at one of the faces.

## Patentansprüche

1. Vorrichtung zur Steuerung der Verriegelung und Entriegelung einer Tür oder dgl., umfassend einen Griff (46), durch dessen Bewegung eine Zustandsveränderung in der Verriegelung oder Entriegelung der Tür gesteuert werden kann, eine Klappe (54), die zwischen einer geschlossenen Position und einer geöffneten Position, in der es möglich ist, den Griff (46) zu fassen, beweglich ist, Mittel zur Verriegelung und zur Entriegelung des Griffes (46), die in der Lage sind, zwei Zustände einzunehmen, einen ersten verriegelten Zustand, in dem der Griff fixiert ist, und einen zweiten, sogenannten entriegelten Zustand, in dem der Griff betätigt werden kann, sowie einen Anschlag (64), um die Bewegung der Klappe (54) zu kontrollieren, insbesondere während der Zustandsveränderung der Mittel zur Verriegelung und Entriegelung des Griffes (46), **dadurch gekennzeichnet, dass** der Anschlag (64) elastisch verformbar ist, so dass er während der Zustandsveränderung der Mittel zur Verriegelung und Entriegelung des Griffes (46) von der Klappe (54) verformt werden kann.

2. Vorrichtung zur Steuerung der Verriegelung und Entriegelung einer Tür oder dgl. nach Anspruch 1, **dadurch gekennzeichnet, dass** die Klappe (54) um eine mit dem Griff (46) verbunden ausgebildete Achse (56) schwenkbar ist.

3. Vorrichtung zur Steuerung der Verriegelung und Entriegelung einer Tür oder dgl. nach Anspruch 1 oder 2, **dadurch gekennzeichnet, dass** der elastisch verformbare Anschlag (64) aus Elastomer besteht.

4. Vorrichtung zur Steuerung der Verriegelung und Entriegelung einer Tür oder dgl. nach einem der Ansprüche 1 bis 3, **dadurch gekennzeichnet, dass** der elastisch verformbare Anschlag (64) eine rechteckige Basis (66) mit, im Bereich einer der Seiten, einem verformbaren zylindrischen Abschnitt (70) aus Elastomer umfasst.

5. Flugzeugtür, in der eine Vorrichtung zur Steuerung der Verriegelung und Entriegelung der Tür integriert ist, wobei die Vorrichtung einen Griff (46) aufweist, durch dessen Bewegung eine Zustandsveränderung in der Verriegelung oder Entriegelung der Tür gesteuert werden kann, eine Klappe (54), die zwischen einer geschlossenen Position und einer geöffneten Position, in der es möglich ist, den Griff (46) zu fassen, beweglich ist, Mittel zur Verriegelung und zur Entriegelung des Griffes (46), die in der Lage sind, zwei Zustände einzunehmen, einen ersten verriegelten Zustand, in dem der Griff fixiert ist, und einen zweiten, sogenannten entriegelten Zustand, in dem der Griff betätigt werden kann, sowie einen Anschlag (64) um die Bewegung der Klappe (54) zu kontrollieren, insbesondere während der Zustandsveränderung der Mittel zur Verriegelung und Entriegelung des Griffes (46), **dadurch gekennzeichnet, dass** der Anschlag (64) elastisch verformbar ist, so dass er während der Zustandsveränderung der Mittel zur Verriegelung und Entriegelung des Griffes (46) von der Klappe (54) verformt werden kann.

6. Flugzeugtür nach Anspruch 5, **dadurch gekennzeichnet, dass** die Klappe (54) um eine mit dem Griff (46) verbunden ausgebildete Achse (56) schwenkbar ist.

7. Flugzeugtür nach Anspruch 5 oder 6, **dadurch gekennzeichnet, dass** der elastisch verformbare Anschlag (64) aus Elastomer besteht.

8. Flugzeugtür nach einem der Ansprüche 5 bis 7, **dadurch gekennzeichnet, dass** der elastisch verformbare Anschlag (64) eine rechteckige Basis (66) mit, im Bereich einer der Seiten, einem verformbaren zylindrischen Abschnitt (70) aus Elastomer umfasst.
